# EUROPÄISCHE PATENTSCHRIFT

(11) **EP 1 570 741 B1**
(45) Veröffentlichungstag und Bekanntmachung des Hinweises auf die Patenterteilung: **10.10.2007**
(21) Anmeldenummer: 05004722.4
(22) Anmeldetag: 03.03.2005
(51) Int. Cl.: A22C 11/12, B27F 7/38

(54) **Clipzuführung**
Clip feeding
Alimentation de clips

(30) Priorität: 03.03.2004 DE 102004010390
(43) Veröffentlichungstag der Anmeldung: 07.09.2005
(73) Patentinhaber: Poly-clip System GmbH & Co. KG, 60489 Frankfurt am Main (DE)
(72) Erfinder: Töpfer, Klaus, 64572 Büttelborn (DE)
(74) Vertreter: Eisenführ, Speiser & Partner

(56) Entgegenhaltungen:
- EP-A- 1 269 851
- DE-A1- 2 339 560
- DE-A1- 19 644 074
- DE-A1- 19 953 694
- US-A- 4 827 591

## Beschreibung

Die Erfindung betrifft eine Clipzuführung mit einer Magazinstange zum Führen eines Clipstranges von einem auf einer Spule aufgewickelten Clipvorrat zu einer Vereinzelungseinrichtung einer Verschließvorrichtung zur Herstellung von Würsten und mit einem im Bereich der Magazinstange angeordneten Clipantrieb.

Mit der eingangs erwähnten Verschließvorrichtung werden Würste mit einem meist pastösen Füllgut in einer flexiblen Schlauchhülle (beispielsweise einem Darm) hergestellt. Diese Verschließvorrichtungen (nachstehend auch Clipautomaten genannt) funktionieren üblicherweise dergestalt, dass die einseitig verschlossene, gefüllte Schlauchhülle mittels sog. Verdrängerelemente an einer Stelle eingeschnürt und daraufhin in dem Einschnürbereich befindliches Füllgut durch eine Bewegung in Richtung der Schlauchachse verdrängt wird. Auf dem so gebildeten Schlauchzopf wird wenigstens ein Verschlusselement (oder Clip) angebracht und verschlossen. Auf diese Weise können entweder zusammenhängende Wurstketten produziert oder beispielsweise einzelne Schläuche oder Beutel verschlossen werden. Mit sogenannten Doppelclipautomaten werden gleichzeitig zwei nebeneinanderliegende Clips auf dem in der beschriebenen Weise gebildeten Schlauchzopf angebracht und verschlossen, wonach dieser zwischen den beiden Clips durchtrennt wird. Auf diese Weise werden einzelne Würste in Serie produziert.

Wie in allen Bereichen der Technik konnte auch auf dem Gebiet der Clipmaschinen die Produktivität in der Vergangenheit um ein erhebliches Maß gesteigert werden. Dies erfordert eine entsprechende Anpassung der peripheren Einrichtungen - so auch der Magazinstange und der gesamten Clipzuführung. Die einfachsten bekannten Clipzuführungen bestehen aus einer im Wesentlichen vertikal angeordneten Magazinstange, auf die von Hand ein aus einer Vielzahl hintereinander aufgereihter und durch ein Siegelband verbundener Clips bestehender "endlicher" Clipstrang aufgezogen wird. Die Magazinstange ist bekanntermaßen an ihrem unteren, der Verschließeinrichtung nahen Ende in einem Radius so umgelenkt, dass der Clipstrang einem in der Regel senkrecht angeordneten Vereinzelungsfenster der Verschließvorrichtung, horizontal zugeführt wird. Hier, am Ausgang der Magazinstange wird der in Vorschubrichtung vorderste Clip von dem Clipstrang zur weiteren Verarbeitung getrennt.

Der Vorschub wird bei dieser Clipzuführung üblicherweise durch die Schwerkraft erzeugt. Der maximale Vorrat an Clips ist durch die Kapazität der Magazinstange vorgegeben. Da diese aufgrund des Schwerkraftantriebs vertikal angeordnet ist und ihr Eingang zum Zweck des manuellen Aufziehens der Clipstränge gut erreichbar sein muss, ist ihre Länge und damit Kapazität sehr begrenzt. Sie ist für schnell arbeitende Verschließvorrichtungen nur begrenzt geeignet, da ein ständiges, manuelles Nachmagazinieren erforderlich wäre.

Aus der US 3,189,220 ist für einen anderen Anwendungsfall ein horizontaler Riemen- und ein Reibrollenantrieb für endliche Stränge von Heftklammern bekannt, welche in einem vorgeschalteten, vertikalen Magazin bevorratet sind und der Schwerkraft folgend automatisch nachgelegt werden.

Das Dokument EP 1269851 offenbart ein Verschlusselement, das zwei Paare von Ven Verdrängerblechen und zwischen diesen eine aus zwei zusammenwirkenden gegenläufig bewegbaren Elementen bestehende Verschließeinrichtung aufweist.

Eine ebenfalls bekannte Clipzuführung zeichnet sich dadurch aus, dass der Clipstrang auf einer - auch aus Hygienegründen - oberhalb des Vereinzelungsfensters aufgehängten Spule zu einem größeren Clipvorrat aufgewickelt ist. Der quasi "endlose" Clipstrang wird von dieser Spule abgezogen und in den Eingang einer Magazinstange eingeführt. Die Geometrie der Magazinstange gleicht im Wesentlichen der der oben beschriebenen Magazinstange, die aufgrund des Spulenvorrats aber nicht mehr die Funktion der Vorratsbildung zu erfüllen hat. Der vertikale Teil der Magazinstange kann daher kürzer sein.

Der Vorschub wird bei dieser Clipzuführung üblicherweise durch einen aktiven, im Bereich der Magazinstange an dem Clipstrang angreifenden Clipantrieb erzeugt. Es sind zwei Antriebsmechanismen bekannt. Zum einen kann die erforderliche Antriebskraft über zwei auf gegenüberliegenden Seiten an dem Clipstrang anliegende, permanent oder intermittierend angetriebene Reibrollen eingeleitet werden. Alternativ kann auch ein Antrieb vorgesehen werden, bei dem zwei linear hin und her bewegliche, an dem Clipstrang angreifende Mitnehmer abwechselnd schrittweise Vorschub erzeugen.

Ist der Clipvorrat verbraucht, d.h. die Spule abgewickelt und hat der letzte Clip des Stranges den Clipantrieb passiert, wird die Verschließvorrichtung meist automatisch angehalten, da dann der Antrieb nicht mehr an dem restlichen in der Magazinstange befindlichen Clipstrang angreifen kann, und somit kein Vorschub mehr gewährleistet wird. Zum Wechseln des Clipvorrats muss der leere Spulenkörper von seinem Halter herunter und der restliche Clipstrang entgegen der Vorschubrichtung aus der Magazinstange heraus gezogen werden, damit der Anfang eines neuen Clipstrangs so eingefädelt werden kann, dass die Antriebselemente des Clipantriebs an diesem angreifen können.

Die durch dieses Nachmagazinieren bedingten Standzeiten sind unerwünscht. Ferner bleibt bei jedem Wechsel ein unverwertbarer Rest des Clipstrangs übrig. Um das Verhältnis aus Betriebs- zu Standzeit, als auch das Verhältnis aus genutzten Clips zu Restclips zu verbessern, wurden die Clipspulen auf eine Kapazität mehrerer tausend Clips vergrößert. An dieser Stelle stoßen die Bemühungen, die Produktivität und Ausbeute zu steigern, jedoch an eine Grenze, da die Clipspulen in der Regel manuell auf den dafür vorgesehenen Halter gehoben werden müssen, so dass deren Gewicht nicht unbegrenzt weiter gesteigert werden kann.

Aufgabe der vorliegenden Erfindung ist es demgemäss, eine Clipzuführung bereitzustellen, durch die sich die Produktivität und die Ausbeute von Verschließvorrichtungen erhöhen lässt.

Die Aufgabe wird erfindungsgemäß durch eine Clipzuführung der eingangs genannten Art gelöst, die zwei in Vorschubrichtung beabstandete, mit dem Clipstrang in Eingriff bringbare und separat Vorschub leistende Antriebselemente mit einer dazwischenliegenden Pufferstrecke aufweist.

Hierdurch wird zwischen den beiden hintereinander angeordneten, d.h. in Vorschubrichtung beabstandeten Antriebselementen ein Zeitpuffer geschaffen, der abhängig von dem Clipverbrauch und dem Abstand zwischen den Antriebselementen (Puffervorrat oder Pufferstrecke) einer Bedienperson ausreichend Gelegenheit gibt, um den Clipvorrat zu erneuern, während die Verschließvorrichtung noch weiterarbeiten kann. Die erfindungsgemäße Clipzuführung erlaubt nämlich, den Anfang des neuen Clipstranges in den Eingriffsbereich des in Vorschubrichtung zuerst kommenden Antriebselementes einzuführen, während das zweite dahinterliegende Antriebselement das Ende des alten Clipstranges noch weiterfördert.

Gemäß einer ersten vorteilhaften Ausführungsform sind die Antriebselemente dergestalt eingerichtet, dass das erste Antriebselement der Antriebselemente eine größere Vorschubgeschwindigkeit erzeugt als das in Vorschubrichtung dahinterliegende zweite Antriebselement. Die Antriebselemente weisen dazu vorzugsweise Reibrollen auf.

Durch diese Maßnahme leisten beide Antriebselemente dergestalt separat Vorschub, dass durch die größere Antriebsgeschwindigkeit des ersten Antriebselementes der Anfang des neuen Clipstranges das Ende des alten einholen kann. Die Lücke, die während des Wechsels entstanden ist, kann somit geschlossen werden und es entstehen überhaupt keine Standzeiten.

Gemäß einer weiteren vorteilhaften Ausgestaltung sind wenigstens zwei Antriebselemente dergestalt eingerichtet, dass sie in gleicher Richtung auf einer geschlossenen Bahn umlaufen, die einen Vorschubweg entlang eines Abschnitts der Magazinstange, auf dem wenigstens ein in Eingriff befindliches Antriebselement in Vorschubrichtung läuft, und einen Rücklaufweg, auf dem die übrigen Antriebselemente außer Eingriff der Vorschubrichtung entgegenlaufen. Zwischen zwei benachbarten Antriebselementen, die beispielsweise als Mitnehmer an einer umlaufenden Kette oder einem umlaufenden Riemen ausgestaltet sein können, ist dann ein entsprechender Puffervorrat ausgebildet.

Noch eine weitere vorteilhafte Ausgestaltung sieht vor, dass die Antriebselemente wechselweise mit dem Clipstrang in Eingriff bringbar und dergestalt eingerichtet sind, dass ein erstes in Eingriff befindliches Antriebselement entlang eines ersten Vorschubweges in Vorschubrichtung läuft, während ein zweites außer Eingriff befindliches Antriebselement entlang eines zweiten Vorschubweges der Vorschubrichtung entgegenläuft, und dass der Eingriff und die Laufrichtung der Antriebselemente umkehrbar ist.

Mit Vorschubweg ist der Weg entlang der durch die Magazinstange vorgegebenen Führungsbahn gemeint, über den das in Eingriff befindliche Antriebselement seinen Vorschub auf den Clipstrang einleitet. Diese Lösung erlaubt, dass der Anfang des neuen Clipstranges (manuell) unter dem außer Eingriff befindlichen Antriebselement hindurch bis an das Ende des alten Clipstranges herangeführt werden kann, während dieser von dem daran angreifenden Antriebselement weiter in Vorschubrichtung gefördert wird. Der Zeitpuffer, der dafür zur Verfügung steht ist wiederum durch den Clipverbrauch und den Abstand zwischen den Antriebselementen bestimmt. Danach wird durch (manuell ausgelöstes) Umkehren, der Eingriff und die Laufrichtung beider Antriebselemente umgekehrt. Das zuvor außer Eingriff befindliche Antriebselement greift nun an dem neuen Clipstrang an und treibt diesen zusammen mit dem alten Clipstrang in dieselbe Vorschubrichtung an, während das zuvor in Eingriff befindliche Antriebselement "leer" gegen die Vorschubrichtung zurückläuft. In diesem Fall entsteht erst gar keine Lücke während des Wechsels, da der neue Clipstrang an das Ende des alten Clipstranges herangeführt, der Puffervorrat gewissermaßen wiederaufgefüllt wurde. Standzeiten können auf diese Weise noch effizienter vermieden werden.

Bevorzugt sind dem ersten und zweiten Vorschubweg zugeordnete und durch die korrespondierenden Antriebselemente betätigbare Positionsendschalter vorgesehen, die jeweils dazu eingerichtet sind, die Laufrichtungsumkehr beider Antriebselemente auszulösen. Dies wird in der Regel benötigt werden, wenn die Antriebselemente nicht auf einer geschlossenen (Kreis-)Bahn umlaufen, sondern - wie bei dieser Ausführungsform - eine Hin- und HerBewegung ausführen.

Eine besonders bevorzugte Weiterbildung sieht vor, dass die Antriebselemente Klinken mit einer Freilaufrichtung in Vorschubrichtung und einer Sperrrichtung entgegen der Vorschubrichtung aufweisen. Durch einen solchen Klinkenmechanismus erfolgt die Eingriffsumkehr abhängig von der Laufrichtung passiv automatisch.

Alternativ oder zusätzlich können die Antriebselemente zum Zweck des außer Eingriff Bringens radial ein- und zum Zweck des in Eingriff Bringens radial ausfahrbar ausgestaltet sein. Dann ist es von Vorteil, wenn die Positionsendschalter ferner jeweils dazu eingerichtet sind, das Ausfahren des Antriebelements auszulösen, dessen Laufrichtung in die Vorschubrichtung umgekehrt wird, und das Einfahren des Antriebelements auszulösen, dessen Laufrichtung in die der Vorschubrichtung entgegengesetzte Richtung umgekehrt wird.

Es folgt die Erläuterung der Erfindung anhand eines Ausführungsbeispiels. In der Zeichnung zeigen:
- Fig. 1: ein Ausführungsbeispiel einer Magazinstange der erfindungsgemäßen Clipzuführung in der Seitenansicht;
- Fig. 2: einen Clipspulenhalter gemäß einer Ausführungsform der erfindungsgemäßen Clipzuführung in der Seitenansicht;
- Fig. 3: eine Seitenansicht eines Paares gekoppelter Antriebselemente gemäß demselben Ausführungsbeispiel der erfindungsgemäßen Clipzuführung;
- Fig. 4: zwei Paare gekoppelter Antriebselemente in der Draufsicht;
- Fig. 5: eine Teilansicht des Ausführungsbeispiels der erfindungsgemäßen Clipzuführung von oben;
- Fig. 6: das Ausführungsbeispiel der erfindungsgemäßen Clipzuführung aus Fig. 5 in der totalen Seitenansicht mit den zwei Paaren gekoppelter Antriebselemente in einer ersten Endstellung;
- Fig. 7: dieselbe Ansicht des Ausführungsbeispiels der Clipzuführung mit den zwei Paaren gekoppelter Antriebselemente in einer sich kreuzenden Stellung; und
- Fig. 8: die Seitensicht auf die erfindungsgemäße Clipzuführung mit einer weggeschwenkten Magazinstange.

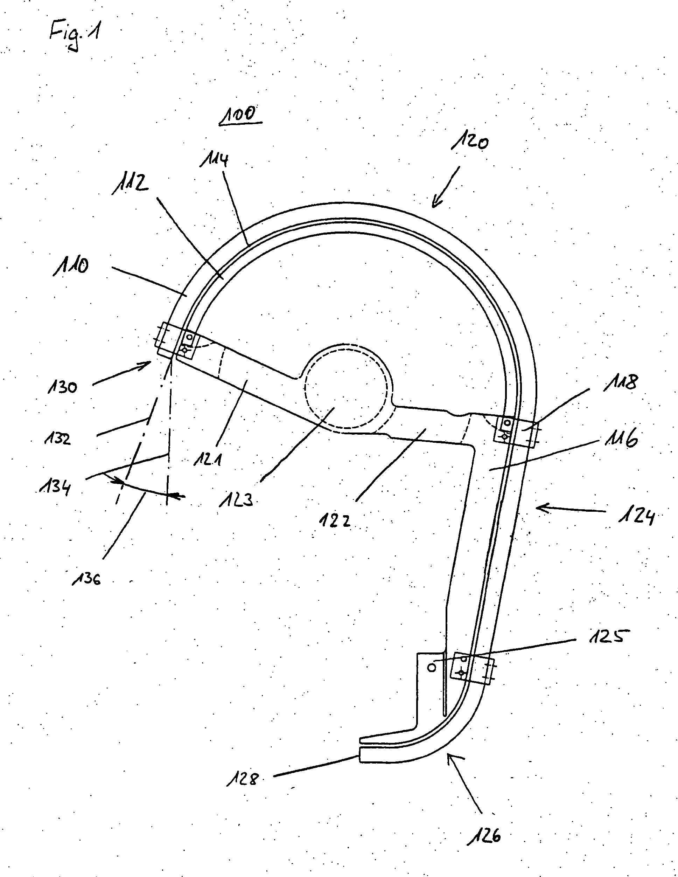

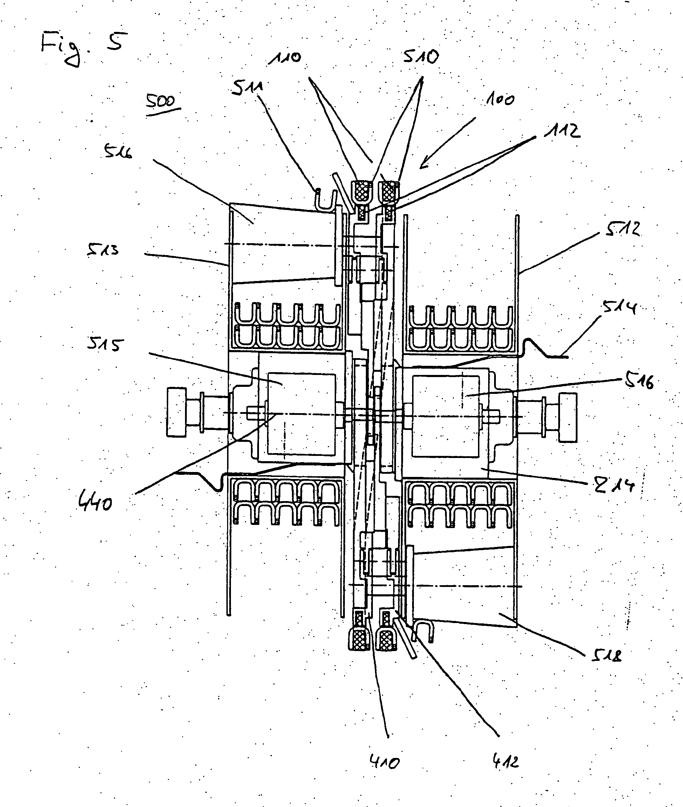

Die in Fig. 1 gezeigte, erfindungsgemäße Magazinstange 100 setzt sich aus mehreren strukturellen Elementen zusammen. Zum Einen weist diese eine äußere Führungsschiene 110 auf, deren Querschnitt, wie in Fig. 5 dargestellt ist, im Wesentlichen dem offenen Querschnittsprofil einer U-förmig (vorgebogenen Verschlussklammer) (Clip) 510 entspricht. Parallel zu der äußeren Führungsschiene 110 ist eine innere Führungsschiene 112 positioniert, die mit der äußeren Führungsschiene 110 einen Spalt 114 einschließt. Das Spaltmaß entspricht in etwa der Stärke des Clipdrahts, so dass der Clipstrang sicher zwischen den beiden Führungsschienen 110 und 112 auf die in Fig. 5 gezeigte Weise geführt wird. Die innere Führungsschiene 112 setzt sich auf der in Fig. 1 gezeigten rechten Seite der Magazinstange 100 funktional in einer Aufhängung 116 fort, welche zugleich das zentrale Bauteil für die gesamte Magazinstange 100 in der nachstehend beschriebenen Weise bildet. An der Aufhängung 116 sind mittels dreier Verbindungselemente 118 die äußere Führungsschiene 110 und die innere Führungsschiene 112 dergestalt miteinander verbunden, dass sich eben jener Spalt 114 ausbildet. Ferner weist die Aufhängung 116 zwei sich zum Zentrum eines oberen, etwa halbkreisförmigen Abschnitts 120 der Magazinstange 100 erstreckende Speichen 121, 122 auf, die in diesem Zentrum mit einer Aufnahme 123 verbunden sind. Mittels der Aufnahme 123 kann die gesamte Magazinstange 100 an einer nicht dargestellten, korrespondierenden Halterung um die Rotationssymmetrieachse (kurz: Rotationsachse) jenes halbkreisförmigen Abschnitts 120 schwenkbar befestigt werden. Schließlich ist im unteren Bereich eines geraden, in etwa senkrechten Abschnitts 124 ein Befestigungselement 125 zur Arretierung der Magazinstange 100 in einer Betriebsposition an der Verschließvorrichtung vorgesehen.

Insgesamt besteht die Magazinstange 100 aus drei funktionalen Abschnitten: dem eine erste Umlenkung bildenden halbkreisförmigen Abschnitt 120, stromabwärts hinter der ersten Umlenkung dem geraden, im Betrieb im Wesentlichen senkrecht angeordneten Abschnitt 124 und weiter stromabwärts einem eine zweite Umlenkung bildenden teilkreisförmigen Abschnitt 126.

Die erste Umlenkung 120 ist so ausgestaltet, dass der Eingang 130 der Magazinstange 100 nach unten weist - oder mit anderen Worten - von unten mit einem Clipstrang bestückbar ist. Dabei kommt es nicht darauf an, dass die Magazinstange 100 mit einem vertikalen Abschnitt beginnt, sondern dass die Magazinstange 100 im Eingangsbereich eine solche Orientierung aufweist, dass das Einfädeln eines losen oder freien Endes eines Clipstrangs in deren Eingang 130 gewährleistet ist. Die Orientierung der Magazinstange im Eingangsbereich wird durch eine Tangente 132 an den halbkreisförmigen Abschnitt 120, genauer an eine durch den Spalt 114 gebildete Führungsbahn, verdeutlicht. Da der Clipstrang - wie eingangs erwähnt - typischerweise aus einer Vielzahl aneinandergereihter einzelner Clips besteht, die im Bereich ihres Rückens 512 (siehe Fig. 5) mit einem Siegelband verbunden sind, wird das freie Ende des Clipstrangs der Schwerkraft folgend senkrecht nach unten hängen. Dadurch schließt das freie Ende des Clipstrangs, dessen Orientierung durch eine Vertikale 134 symbolisiert ist, mit der Tangente 132 einen Zwischenwinkel 136 ein, der jedenfalls ein Maß nicht übersteigen darf, bei welchem das Einfädeln des freien Endes des Clipstrangs nicht mehr gewährleistet wird. Es kommt insoweit auch nicht darauf an, dass die erste Umlenkung durch einen wie in Fig. 1 gezeigten halbkreisförmigen Abschnitt 120 gebildet wird. Sie kann beispielsweise ebenso in einzelne Kreisabschnitte mit dazwischen liegenden andersgearteten Abschnitten eingeteilt sein.

Auf dem senkrechten Abschnitt 124 wird der Clipstrang stromabwärts hinter der ersten Umlenkung nach unten geführt. Er weist in dem gezeigten Ausführungsbeispiel eine Länge und Neigung auf, die durch die Abmessungen der Spulen und der Verschließmaschine bestimmt ist. Selbstverständlich kann die Magazinstange zwischen dem Eingang 130 und dem Ausgang 128 - auch auf andere Weise - an verschiedene geometrischen Randbedingungen angepasst werden.

Weiter stromabwärts wird der Clipstrang nochmals mittels des teilkreisförmigen Abschnitts 126 umgelenkt. Dieser Abschnitt läuft mit im Wesentlichen horizontaler Tangente aus, so dass die Magazinstange 100 unter einem rechten Winkel mit ihrem Ausgang 128 in das (hier nicht dargestellte) im Wesentlichen senkrecht angeordnete Vereinzelungsfenster der Verschließvorrichtung mündet.

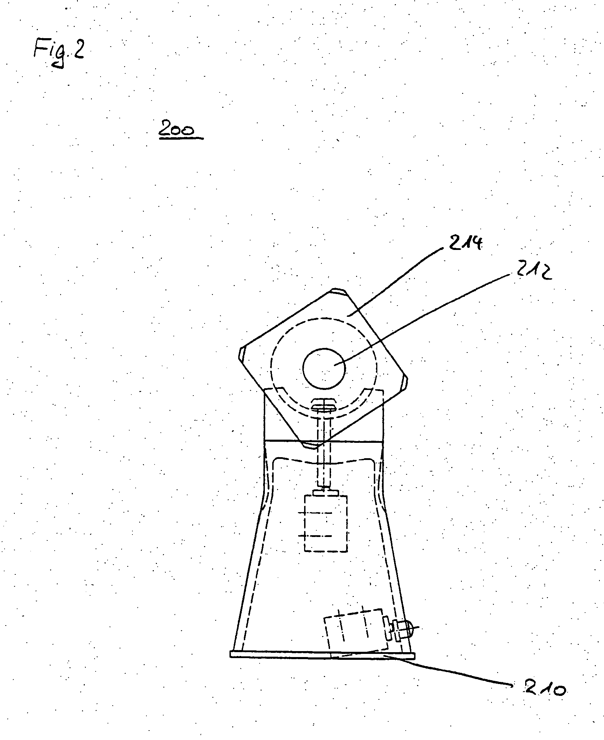

Der in Fig. 2 gezeigte und mit der Magazinstange 100 korrespondierende Clipspulenhalter 200 ist beispielsweise zur Montage auf der Gehäuseoberseite einer Verschließvorrichtung geeignet. Er weist einen Sockel 210 auf, mit dem er an einer oberen Gehäusefläche der Verschließvorrichtung angeflanscht werden kann. An seinem oberen, dem Sockel gegenüberliegenden Ende weist er eine Achse 212 auf. Auf dieser Achse 212 ist eine Spulenaufnahme 214 drehbar gelagert. In Fig. 5 ist eine Anordnung in der Draufsicht gezeigt, die erkennen lässt, dass in einer symmetrischen Ausführung des Clipspulenhalters 200 zwei Clipspulen 512, 513 von gegenüberliegenden Seiten auf entsprechende Aufnahmen 214 axial aufgesteckt werden können. Diese Spulen werden durch Federn 514 gegen ein versehentliches Abrutschen von den Spulenaufnahmen gesichert.

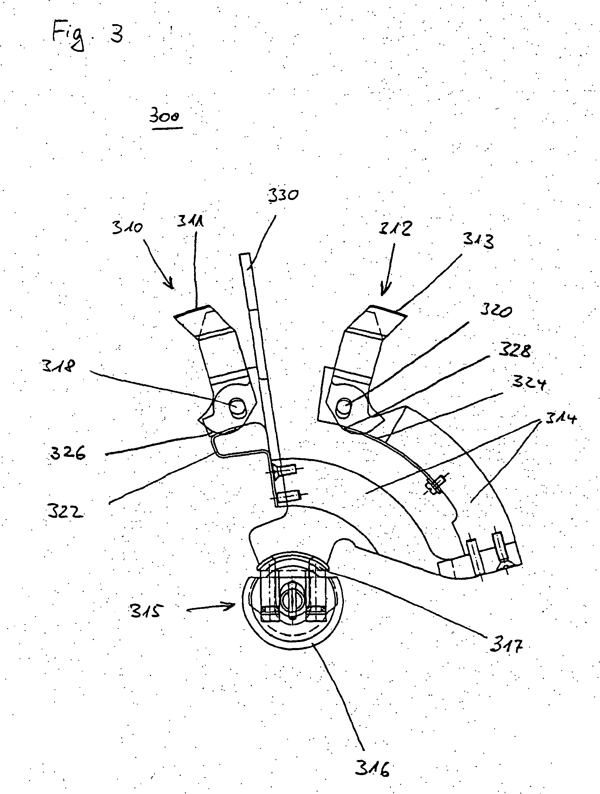

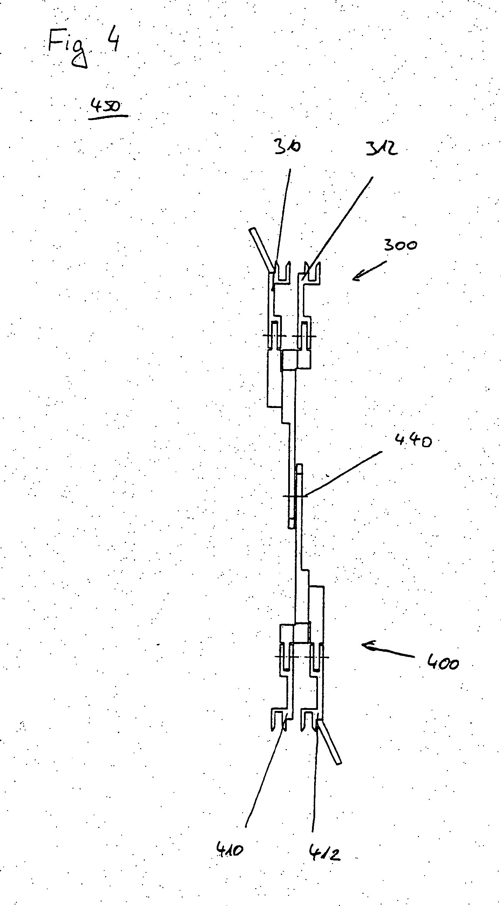

Das in Fig. 3 dargestellte Paar 300 gekoppelter Antriebselemente 310, 312 besteht aus jenen Antriebselementen 310, 312, die jeweils mit dem hier nicht dargestellten Clipstrang in Eingriff bringbare Eingriffsflächen 311, 313 aufweisen, und einem gemeinsamen Arm 314, an dem beide Antriebselemente 310, 312 befestigt sind. Wie in den Fig. 4 und 5 zu sehen ist, sind die Antriebselemente im Eingriffsbereich gegabelt, damit sie die innere Führungsschiene 112 umgreifen und symmetrisch an dem Clipsstrang 510 angreifen können. Die Eingriffsflächen können gezackt, aufgeraut oder gummiert sein, so dass entweder ein reib- oder formschlüssige Mitnahme des Clipstranges in Betracht kommt.

Die Antriebselemente 310, 312 weisen den Eingriffsflächen gegenüberliegend Lager 318 bzw. 320 zur Befestigung an dem Arm 314 auf, die sowohl eine Schwenkbewegung der Antriebselemente als auch eine davon unabhängige lineare Bewegung der Antriebselemente in radialer Richtung erlauben.

Die Antriebselemente weisen ferner an ihrem den Eingriffsflächen gegenüberliegenden Ende jeweils eine Kurve 326, 328 auf. Zwei Federn 322, 324 liegen an diesen Kurven an. Die Kurven sind so geformt, dass die Federn durch ihre Federkraft ein Moment auf die Antriebselemente 310, 312 ausüben, welches diese in ihrer Ruhestellung in eine aufgerichtete (nicht weggeschwenkte) Position zwingt. Ein nicht dargestellter Anschlag sorgt dafür, dass diese Position nicht überschritten werden kann und dass somit eine Sperrrichtung vorgegeben wird. In der anderen, sog. Freilaufrichtung können die Antriebselemente gegen die Federkraft weggeschwenkt werden. Sie wirken daher wie Klinken. Aufgrund des spiegelsymmetrischen Aufbaus entspricht die Freilaufrichtung der einen der Sperrrichtung der anderen Klinke desselben Paares 300.

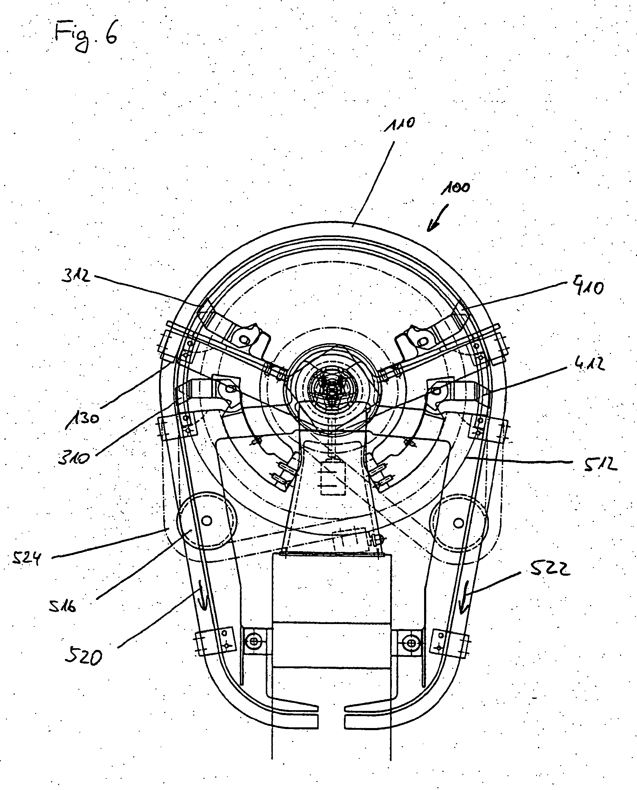

Die Federn 322, 324 bewirken ferner, dass die Antriebselemente 310, 312 radial nach außen gegen den Clipstrang angedrückt werden, vgl. Fig. 6. Sie stellen somit im Rahmen der durch die Lager 138, 320 ermöglichten linearen Bewegung einen Längen- oder Toleranzausgleich sicher und sorgen zugleich für den benötigten Andruck gegen die Clips, um einen sicheren Vorschub zu gewährleisten.

Der Arm 314 verbindet die Antriebselemente 310, 312 mit einer Nabe 315, die sich aus einem achsfesten Teil 316 und einem radial beweglichen Teil 317 zusammensetzt und deren Schwenkachse zu den Eingriffsflächen 311, 313 beider Antriebselemente im Wesentlichen gleich beabstandet ist. Die Schwenkachse fällt wie in den Fig. 5 bis 8 ersichtlich wird, bei dem hier gezeigten Ausführungsbeispiel mit der Achse 212 der Spulenaufnahme 214 und der Rotationsachse der Magazinstangenaufnahme 122 zusammen. Der sich aus dieser Anordnung ergebende Vorteil wird aus der unter Bezugnahme auf die Fig. 6 bis 8 erfolgenden Funktionsbeschreibung ersichtlich.

Der radial bewegliche Teil 317, der mit dem Arm 314 verbunden ist, ist in einer zu dem achsfesten 316 Teil beabstandeten, ausgefahrenen Stellung dargestellt, in der die Antriebselemente 310, 312 an dem Clipstrang anliegen. Der radial bewegliche Teil 317 kann - beispielsweise durch einen pneumatischen Antrieb entweder manuell oder automatisch betätigt - an den achsfesten Teil 316 heran- und wieder weggefahren werden. Hierdurch werden die Antriebselemente dieses Paares gemeinsam radial ein- bzw. ausgefahren und mit dem Clipstrang in bzw. außer Eingriff gebracht.

Schließlich ist an dem Arm 314 eine Handhabe 330 angebracht, die ein manuelles Verschieben des Paares gekoppelter Antriebselemente 300 samt Nabe 315 ermöglicht.

In Fig. 4 ist eine Anordnung zweier Paare gekoppelter Antriebselemente 300 und 400 in der Draufsicht dargestellt. Diese sind koaxial zueinander ausgerichtet, d.h. dass die Schwenkachsen 440 ihrer Naben zusammen fallen. Sie sind ferner in identischer Weise aufgebaut, jedoch seitenverkehrt so gegeneinander angeordnet, dass die Antriebselemente 310, 312 bzw. 410, 412 in zwei parallelen Ebenen senkrecht zur Schwenkachse 440 nebeneinander liegen. Anders gesagt wirken die Antriebselemente 310 und 410 bzw. 312 und 412 jeweils in derselben Ebene, d.h. auf denselben Clipstrang. Die Doppelebenenanordnung macht den hier gezeigten Clipantrieb 450 tauglich für den Einsatz in einer sog. Doppelclipzuführung 500.

In Fig. 5 wird dieses Zusammenwirken sowie der konstruktive Zusammenhang der bisher vorgestellten Elemente der erfindungsgemäßen Clipzuführung in der teilweise geschnittenen Draufsicht verdeutlicht. Zum Einen ist erkennbar, dass - wie bereits vorher angesprochen - die Achsen 440 der Spulenaufnahme 214, der Naben 315 sowie der Magazinstangen 100 zusammen fallen. Ferner sieht man, dass es sich um eine Doppelclipzuführung 500 mit zwei seitenverkehrt gegeneinander angeordneten Clipzuführungen handelt, die sich einen gemeinsamen Spulenhalter teilen. Auf der gemeinsamen Achse 440 liegen zwei vorzugsweise pneumatische Schwenkantriebe 515, 516, die mit den Naben 315 verbunden sind und jeweils eines der Paare gekoppelter Antriebselemente 300, 400 (in entgegengesetzter Richtung) antreiben.

Jeweils ein auf einen Spulenkörper 512, 513 aufgewickelter Clipstrang wird nach schräg unten abgewickelt und über jeweils eine zugeordnete Umlenkrolle 516 bzw. 518 dem Eingang 130 der jeweils zugeordneten Magazinstange 100, wie in Fig. 6 illustriert ist, zugeführt. Die Umlenkrollen 516, 518 sind kegelförmig in Richtung auf die Mittelebene zwischen den Clipzuführungen verjüngt, so dass der Clipstrang 511 beim Abwickeln in axialer Richtung auf die jeweilige Magazinstange 110 hingelenkt wird.

Die beiden Paare gekoppelter Antriebselemente 300 und 400 befinden sich in der in Fig. 6 gezeigten Darstellung jeweils in einer Endposition ihrer Schwenkbewegung, in der das jeweils obere Antriebselement 312 bzw. 410 am Eingangsbereich und somit am Anfang seines Vorschubweges angelangt ist. Mit Vorschubweg ist der Weg entlang der durch die Magazinstange 100 bzw. den Spalt 114 vorgegebenen Führungsbahn gemeint, über den das in Eingriff befindliche Antriebselement seinen Vorschub auf den Clipstrang einleitet. Entsprechend ist in dieser Position das jeweils untere Antriebselement 310 und 412 am Ende seines Vorschubweges angelangt. Im Betrieb ist vorgesehen, dass das zuerst in dieser Endposition angelangte Antriebselement die Umkehrung der Schwenkrichtung beider Paare gekoppelter Antriebselemente auslöst.

Dies kann so realisiert werden, dass an jeder Endposition der Doppelclipzuführung 500 ein (nicht dargestellter) Positionsendschalter vorgesehen ist. Diese jedem Vorschubweg zugeordneten, insgesamt also zwei Positionsendschalter, können durch beide Paare gekoppelter Antriebselemente beispielsweise von einem Abschnitt, einer Nocke oder einem Vorsprung des jeweiligen Armes 314 oder der zugeordneten Nabe 315 betätigt werden. Die beiden Positionsendschalter sind vorzugsweise über eine gemeinsame Steuerung mit beiden Antrieben verbunden, so dass immer der zuerst betätigte Positionsendschalter die Richtungsumkehr aller Antriebselemente auslöst.

Es kann aber auch ein (zentraler) Positionsendschalter genügen, wenn dieser beispielsweise als Flip-Flop-Schalter ausgeführt ist. Er kann dann abwechselnd durch jeweils eine an jedem Arm 314 oder jeder Nabe 315 vorgesehen Nockenkurve betätigt werden.

Während also vor dem Umschalten das jeweils untere Antriebselement 310, 412 mit dem Clipstrang auf der zugeordneten Magazinstange in Eingriff war und diesen in die durch einen Pfeil 520, 522 gekennzeichnete Vorschubrichtung vorangetrieben hatte, wurde das damit jeweils gekoppelte obere Antriebselement 312; 410 in seiner Freilaufrichtung über den Clipstrang auf der jeweils anderen Magazinstange hinweggezogen. Nach dem Betätigen eines Positionsendschalters in der oben beschriebenen Weise, wird die Drehrichtung der Clipantriebe 316 umgekehrt. Dadurch gelangen die in Fig. 6 jeweils oberen Antriebselemente 312, 410 durch ihre Klinkenfunktion automatisch - gewissermaßen auf passive Weise - in Eingriff mit dem auf der zugeordneten Magazinstange aufgereihten Clipstrang. Die zuvor in Eingriff befindlichen Antriebselemente 310, 412 werden nun ebenfalls bedingt durch ihre Klinkenfunktion - passiv - in ihrer Freilaufrichtung entgegen der Vorschubrichtung zurückgezogen.

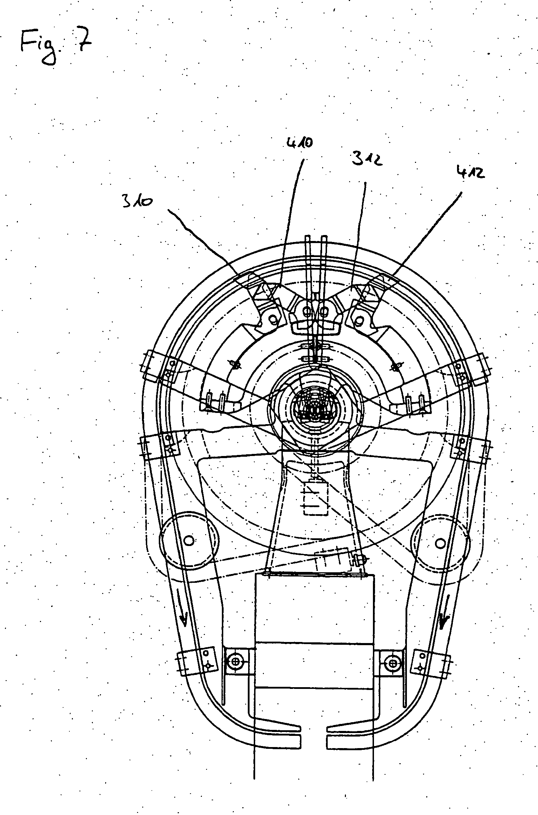

Der Wechsel zwischen der Sperr- und Freilaufeigenschaft der Antriebselemente ist nicht zwingend erforderlich, sondern kann durch eine mit der Richtungsumkehr des Schwenkantriebs verbundene, aktive radiale Ein- und Ausfahrbarkeit ersetzt werden. Jedoch ist die Schwenkbarkeit der Antriebselemente um deren Lager 318, 320 zwingend erforderlich, damit sich die beiden auf denselben Clipstrang wirkenden Antriebselemente 310 und 410 bzw. 312 und 412 in der in Fig. 7 gezeigten Weise ausweichen können.

In Fig. 6 ist noch zu erkennen, dass der Vorschubweg der Antriebselemente beinahe den vollständigen halbkreisförmigen Abschnitt 120 der Magazinstange 100 einschließt. Je größer dieser maximale Abstand zwischen jeweils zwei auf denselben Clipstrang wirkenden Antriebselemente ist, desto größer ist der Pufferbereich, der zum Wechsel der Clipspulen zur Verfügung steht. Solange sich das Ende eines aufgebrauchten Clipstranges innerhalb dieses Winkelbereiches befindet, hat man genügend Zeit, den Anfang eines neuen Clipstranges über den Eingang 130 der entsprechenden Magazinstange 100 aufzufädeln, zwischen dem Anfang des neuen Clipstrangs und dem Ende des alten Clipstrangs einen lückenlosen Anschluss wiederherzustellen und über einen nicht dargestellten, manuell betätigbaren Schalter eine Umschaltung der Laufrichtung zu bewirken. Der manuell betätigbare Schalter ist demnach mit dem oder den Positionsendschalter(n) über eine Steuerung verbunden, so dass die Betätigung irgendeines dieser Schalter die Richtungsumkehr aller Antriebselemente auslöst. In Folge des Umschaltens gelangt das jeweils zweite Antriebeselement (aktiv oder passiv) in Eingriff mit dem Anfang des neuen Clipstranges, der das Ende des alten Clipstrangs vor sich herschiebt. Ein lückenloser Nachschub an Clips kann so im laufenden Betrieb ohne Standzeiten sichergestellt werden.

Für das Wechseln der Clipspulen 512, 513 steht sogar ein noch größerer Zeitraum zur Verfügung, da das lose Ende eines aufgebrauchten Clipstrangs, an dem nach unten weisenden Eingang der entsprechenden Magazinstange hängt und über diesen restlos aufgezogen werden kann. Dieser zusätzliche Vorrat an Clips gibt der Bedienperson weitere Zeit, um den leeren Spulenkörper von der jeweiligen Aufnahme abzunehmen und einen vollen darauf zu setzen.

Diese Funktionalität ist bei der gewählten Geometrie sogar auf sehr engem Raum gegeben. In den Fig. 6 bis 8 ist zu sehen, dass nämlich der Durchmesser der Spulenkörper 512 in etwa dem Durchmesser des halbkreisförmigen Abschnitts der Magazinstangen 100 entspricht. Die Magazinstange 100 nimmt gegenüber dem durch die ohnehin vorhandenen Spulenkörper 512, 513 benötigten Platz bei maximaler Länge des Puffervorrats keinen wesentlichen zusätzlichen Raum ein. Dies hat insbesondere den Vorteil der kompakten Bauweise. Jedoch ist die Erfindung nicht zwingend an diese Bauform gebunden. Den Schwenkantrieb vorausgesetzt, genügt die Forderung, dass der Vorschubweg kreissegmentförmig ist.

In Fig. 7 sind die Antriebselemente in einer anderen Stellung zu sehen. Sie sind so konzipiert, dass das gerade außer Eingriff befindliche Antriebselement 410, 312, wenn es das im Eingriff auf denselben Clipstrang befindliche Antriebselement 310 bzw. 412 passiert um sein jeweiliges Lager 318, 320 passiv gegen die Federkraft weggeschwenkt wird. Auch an Stelle dieser vorteilhaften Weiterbildung kann eine andere Konstruktion treten. Beispielsweise können die Vorschubwege beider auf denselben Clipstrang wirkenden Antriebselemente völlig separiert sein, so dass es keine solche Begegnung geben kann. Auch unter diesen Umständen ließe sich eine Doppelclipführung mit nur zwei (Schwenk-)Antrieben realisieren, jedoch zu dem Preis einer weniger kompakten Bauform.

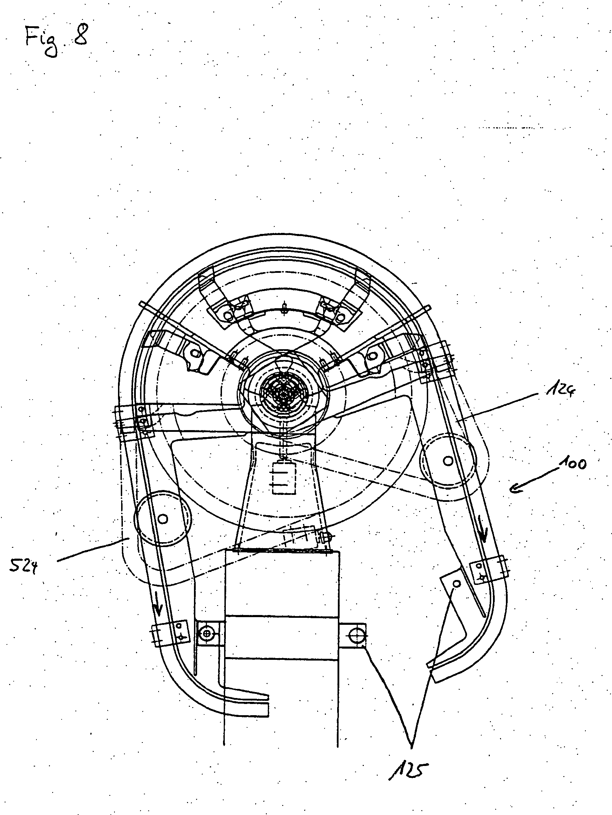

Fig. 8 zeigt dasselbe Ausführungsbeispiel der erfindungsgemäßen Clipzuführung, wobei in dieser Darstellung eine der beiden Magazinstangen 100 nach lösen der Arretierung 125 dergestalt weggeschwenkt ist, dass der zur Mündung in das entsprechende Vereinzelungsfenster vorgesehene Ausgang 128 zu diesem Vereinzelungsfenster beabstandet ist. Dieser Wegschwenkvorgang dient dem Zweck des Zugriffs auf das Vereinzelungsfenster und den Clipmechanismus der Verschließvorrichtung. Dies kann z.B. im Fall von Fehlfunktionen durch verklemmte oder aufgestaute Verschlussklammern in deren Vorschubkanal hinter dem Vereinzelungsfenster erforderlich werden. Vorteilhaft ist hierbei, dass durch die Schwenkbewegung der Magazinstange um ihre Aufnahme 123 die gesamte Magazinstange weiterhin an der Clipzuführung befestigt bleibt, während es bisher erforderlich war, die im Bereich ihres Ausgangs an das Gehäuse der Verschließeinrichtung angeflanschte Magazinstange völlig von der Verschließvorrichtung abzunehmen. Dies hatte den Folgeeffekt, dass zuerst der in der Magazinstange befindliche Clipstrang nach oben, d.h. gegen die Vorschubrichtung aus der Magazinstange herausgezogen werden muss, bevor die Magazinstange abgenommen und beiseite gelegt werden konnte. Demgegenüber kann der Clipstrang in der erfindungsgemäßen Magazinstange 100 beim Schwenken verbleiben. Er wird von dem jeweils im Eingriff befindlichen Antriebselement sogar in seiner Position gehalten, wodurch er in Folge der Schwenkbewegung auf der dem senkrechten Abschnitt 124 der Magazinstange gegenüberliegenden Seite wegen des Längenausgleichs etwas durchhängt.

Sollte es in Einzelfällen dennoch nötig sein, einen aufgezogenen Clipstrang von einer Magazinstage abzunehmen, dann wird dies erfindungsgemäß dadurch ermöglicht, dass mittels eines (weiteren) manuell betätigbaren Schalters, der das in Zusammenhang mit Fig. 3 beschriebene Heranfahren des radial beweglichen Teils 317 an den achsfesten Teil 316 der Nabe 315 auslöst, alle dem betreffenden Clipstrang zugeordneten Antriebselemente durch eine gleichzeitige Einfahrbewegung außer Eingriff gebracht werden können. Dann ist der Clipstrang frei und kann gegen die Vorschubrichtung von der Clipstange wieder abgezogen werden.

## Patentansprüche

1. Clipzuführung mit einer Magazinstange zum Führen eines Clipstranges von einem auf einer Spule aufgewickelten Clipvorrat zu einer Vereinzelungseinrichtung einer Verschließvorrichtung zur Herstellung von Würsten und mit einem im Bereich der Magazinstange angeordneten Clipantrieb,
**dadurch gekennzeichnet, dass** der Clipantrieb zwei in Vorschubrichtung beabstandete, mit dem Clipstrang in Eingriff bringbare und separat Vorschub leistende Antriebselemente mit einer dazwischenliegenden Pufferstrecke aufweist.

2. Clipzuführung nach Anspruch 1,
**dadurch gekennzeichnet, dass** die Antriebselemente dergestalt eingerichtet sind, dass ein erstes Antriebselement der Antriebselemente eine größere Vorschubgeschwindigkeit erzeugt als ein in Vorschubrichtung dahinterliegendes zweites Antriebselement.

3. Clipzuführung nach Anspruch 2,
**dadurch gekennzeichnet, dass** die Antriebselemente Reibrollen aufweisen.

4. Clipzuführung nach Anspruch 1,
**dadurch gekennzeichnet, dass** wenigstens zwei Antriebselemente dergestalt eingerichtet sind, dass sie in gleicher Richtung auf einer geschlossenen Bahn umlaufen, die einen Vorschubweg entlang eines Abschnitts der Magazinstange, auf dem wenigstens ein in Eingriff befindliches Antriebselement in Vorschubrichtung läuft, und einen Rücklaufweg, auf dem die übrigen Antriebselemente außer Eingriff der Vorschubrichtung entgegenlaufen.

5. Clipzuführung nach Anspruch 1,
**dadurch gekennzeichnet, dass** die Antriebselemente wechselweise mit dem Clipstrang in Eingriff bringbar und dergestalt eingerichtet sind, dass ein erstes in Eingriff befindliches Antriebselement entlang eines ersten Vorschubweges in Vorschubrichtung läuft, während ein zweites außer Eingriff befindliches Antriebselement entlang eines zweiten Vorschubweges der Vorschubrichtung entgegenläuft, und dass der Eingriff und die Laufrichtung der Antriebselemente umkehrbar ist.

6. Clipzuführung nach Anspruch 5,
**gekennzeichnet durch** dem ersten und, zweiten Vorschubweg zugeordnete und **durch** die korrespondierenden Antriebselemente betätigbare Positionsendschalter, die jeweils dazu eingerichtet sind, die Laufrichtungsumkehr beider Antriebselemente auszulösen.

7. Clipzuführung nach Anspruch 5 oder 6,
**dadurch gekennzeichnet, dass** die Antriebselemente Klinken mit einer Freilaufrichtung in Vorschubrichtung und einer Sperrrichtung entgegen der Vorschubrichtung aufweisen.

8. Clipzuführung nach einem der Ansprüche 5 bis 7,
**dadurch gekennzeichnet, dass** die Antriebselemente zum Zweck des außer Eingriff Bringens radial ein- und zum Zweck des in Eingriff Bringens radial ausfahrbar sind.

9. Clipzuführung nach Anspruch 8,
**dadurch gekennzeichnet, dass** die Positionsendschalter jeweils dazu eingerichtet sind, das Ausfahren des Antriebelements auszulösen, dessen Laufrichtung in die Vorschubrichtung umgekehrt wird, und das Einfahren des Antriebelements auszulösen, dessen Laufrichtung in die der Vorschubrichtung entgegengesetzte Richtung umgekehrt wird.

10. Clipzuführung wenigstens nach Anspruch 5,
**gekennzeichnet durch** einen manuell betätigbaren Schalter, der dazu eingerichtet ist, die Laufrichtungsumkehr auszulösen.

11. Clipzuführung wenigstens nach Anspruch 5,
**gekennzeichnet durch** einen manuell betätigbaren Schalter, der dazu eingerichtet ist, die Eingriffsumkehr auszulösen.

12. Clipzuführung wenigstens nach Anspruch 5,
**gekennzeichnet durch** einen manuell betätigbaren Schalter, der dazu eingerichtet ist, das gleichzeitige außer Eingriff Bringen aller Antriebselemente auszulösen.

13. Clipzuführung nach Anspruch 5,
**dadurch gekennzeichnet, dass** der erste und zweite Vorschubweg im Wesentlichen deckungsgleich sind.

14. Verschließvorrichtung zum Abteilen von Portionspackungen eines unterteilbaren Füllguts in einer flexiblen Schlauchhülle durch Einschnüren des gefüllten Schlauches und Aufbringen zweier Verschlusselemente auf den durch axiales Verdrängen des Füllgutes gebildeten Schlauchzopf, mit einer Doppelclipzuführung nach einem der vorstehenden Ansprüche.

## Claims

1. A clip feed arrangement comprising a magazine bar for guiding a line of clips from a clip supply wound on a reel to a separating device of a closure apparatus for producing sausages and a clip drive arranged in the region of the magazine bar,
**characterized in that** the clip drive has two drive elements which are spaced in the advance direction and which can be brought into engagement with the line of clips and which separately produce the advance, with an interposed buffer section.

2. A clip feed arrangement according to claim 1 **characterized in that** the drive elements are so adapted that a first drive element of the drive elements produces a greater advance speed than a second drive element which is therebehind in the advance direction.

3. A clip feed arrangement according to claim 2 **characterized in that** the drive elements have friction rollers.

4. A clip feed arrangement according to claim 1 **characterized in that** at least two drive elements are so adapted that they circulate in the same direction on a closed path which includes an advance path along a portion of the magazine bar, on which at least one drive element in a condition of engagement travels in the advance direction and a return path on which the other drive elements which are out of engagement travel in opposite relationship to the advance direction.

5. A clip feed arrangement according to claim 1 **characterized in that** the drive elements can be brought alternately into engagement with the line of clips and are adapted such that a first drive element in a condition of engagement travels along a first advance path in the advance direction while a second disengaged drive element travels along a second advance path in opposite relationship to the advance direction and that the engagement and the direction of travel of the drive elements is reversible.

6. A clip feed arrangement according to claim 5 **characterized by** position limit switches which are associated with the first and second advance paths and which are actuable by the corresponding drive elements and which are respectively adapted to trigger the travel direction reversal of the two drive elements.

7. A clip feed arrangement according to claim 5 or claim 6 **characterized in that** the drive elements have pawls with a freewheel direction in the advance direction and a locking direction in opposite relationship to the advance direction.

8. A clip feed arrangement according to one of claims 5 to 7 **characterized in that** the drive elements are adapted to be movable radially inwardly for the purposes of disengagement and radially outwardly for the purposes of engagement.

9. A clip feed arrangement according to claim 8 **characterized in that** the position limit switches are respectively adapted to trigger the outward movement of the drive element whose direction of travel is reversed into the advance direction and to trigger the inward movement of the drive element whose direction of travel is reversed into the direction opposite to the advance direction.

10. A clip feed arrangement at least according to claim 5 **characterized by** a manually actuable switch which is adapted to trigger the reversal in the direction of travel.

11. A clip feed arrangement at least according to claim 5 **characterized by** a manually actuable switch which is adapted to trigger the reversal of engagement.

12. A clip feed arrangement at least according to claim 5 **characterized by** a manually actuable switch which is adapted to trigger the simultaneous disengagement of all drive elements.

13. A clip feed arrangement according to claim 5 **characterized in that** the first and second advance paths are substantially congruent.

14. A closure apparatus for dividing up portion packs of a sub-dividable filling material in a flexible tubular case by constriction of the filled tube and the application of two closure elements to the tube plait portion formed by axial displacement of the filling material, with a double clip feed arrangement according to one of the preceding claims.

## Revendications

1. Dispositif d'approvisionnement d'agrafes comprenant une barre de magasin destinée à guider une file d'agrafes d'une réserve d'agrafes enroulée sur une bobine vers une zone de séparation d'un dispositif de conditionnement par fermeture pour la fabrication de saucisses, et comprenant également un entraînement d'agrafes agencé dans la zone de la barre de magasin,
**caractérisé en ce que** l'entraînement d'agrafes présente deux éléments d'entraînement à distance l'un de l'autre dans le sens d'avance, pouvant être amenés en prise avec la file d'agrafes et produisant séparément une avance, et entre lesquels est situé un parcours tampon.

2. Dispositif d'approvisionnement d'agrafes selon la revendication 1,
**caractérisé en ce que** les éléments d'entraînement sont aménagés de façon telle qu'un premier élément d'entraînement desdits éléments d'entraînement produise une vitesse d'avance plus grande qu'un deuxième élément d'entraînement situé derrière dans le sens d'avance.

3. Dispositif d'approvisionnement d'agrafes selon la revendication 2,
**caractérisé en ce que** les éléments d'entraînement comportent des galets de friction.

4. Dispositif d'approvisionnement d'agrafes selon la revendication 1,
**caractérisé en ce qu'**au moins deux éléments d'entraînement sont agencés et conçus de façon à circuler en révolution dans le même sens sur une trajectoire fermée, qui comprend un parcours d'avance le long d'un tronçon de la barre de magasin, sur lequel circule dans le sens d'avance au moins un élément d'entraînement se trouvant en prise, et un parcours de retour sur lequel les autres éléments d'entraînement hors de prise circulent dans le sens opposé au sens d'avance.

5. Dispositif d'approvisionnement d'agrafes selon la revendication 1,
**caractérisé en ce que** les éléments d'entraînement peuvent être amenés en prise alternativement avec la file d'agrafes et sont agencés et conçus de façon telle, qu'un premier élément d'entraînement se trouvant en prise circule dans le sens d'avance le long d'un premier parcours d'avance, tandis qu'un deuxième élément d'entraînement se trouvant hors de prise circule dans le sens opposé au sens d'avance le long d'un deuxième parcours d'avance, et **en ce que** la prise et le sens de marche ou de circulation des éléments d'entraînement peut être inversé.

6. Dispositif d'approvisionnement d'agrafes selon la revendication 5,
**caractérisé par** des contacteurs de fin de course de position assignés au premier et au deuxième parcours d'avance et pouvant être actionnés par les éléments d'entraînement correspondants, et qui sont respectivement agencés et réglés pour déclencher l'inversion du sens de marche ou de circulation des deux éléments d'entraînement.

7. Dispositif d'approvisionnement d'agrafes selon la revendication 5 ou 6,
**caractérisé en ce que** les éléments d'entraînement présentent des cliquets avec un sens de roue libre dans le sens d'avance et un sens de blocage en sens opposé au sens d'avance.

8. Dispositif d'approvisionnement d'agrafes selon l'une des revendications 5 à 7,
**caractérisé en ce que** les éléments d'entraînement peuvent être rétractés radialement pour l'amenée hors de prise, et peuvent être extraits radialement pour l'amenée en prise.

9. Dispositif d'approvisionnement d'agrafes selon la revendication 8,
**caractérisé en ce que** les contacteurs de fin de course de position sont agencés et réglés respectivement de manière à déclencher l'extraction de l'élément d'entraînement dont le sens de circulation est inversé vers le sens d'avance, et à déclencher la rétraction de l'élément d'entraînement dont le sens de circulation est inversé dans le sens opposé au sens d'avance.

10. Dispositif d'approvisionnement d'agrafes selon au moins la revendication 5,
**caractérisé par** un commutateur pouvant être actionné manuellement, qui est conçu pour déclencher l'inversion du sens de circulation.

11. Dispositif d'approvisionnement d'agrafes selon au moins la revendication 5,
**caractérisé par** un commutateur pouvant être actionné manuellement, qui est conçu pour déclencher l'inversion de la prise.

12. Dispositif d'approvisionnement d'agrafes selon au moins la revendication 5,
**caractérisé par** un commutateur pouvant être actionné manuellement, qui est conçu pour déclencher l'amenée hors de prise simultanée de tous les éléments d'entraînement.

13. Dispositif d'approvisionnement d'agrafes selon la revendication 5,
**caractérisé en ce que** le premier et le deuxième parcours d'avance sont sensiblement coïncidents.

14. Dispositif de conditionnement par fermeture pour séparer en des emballages en portions un produit de remplissage pouvant être subdivisé dans une enveloppe tubulaire flexible, par resserrement de l'enveloppe remplie et la mise en place de deux éléments de fermeture sur la tresse d'enveloppe formée par refoulement axial du produit de remplissage, à l'aide d'un dispositif double d'approvisionnement d'agrafes selon l'une des revendications précédentes.
